# EUROPEAN PATENT SPECIFICATION

(11) **EP 2 163 517 B1**
(45) Date of publication and mention of the grant of the patent: **13.07.2011**
(21) Application number: 09160495.9
(22) Date of filing: 18.05.2009
(51) Int. Cl.: C01B 31/02, C01B 31/00, H01M 10/00

(54) **Transition metal oxides/multi-walled carbon nanotube nanocomposite and method for manufacturing the same**
Übergangsmetalloxide/mehrwandige Kohlenstoff-Nanoröhrchen-Nanoverbundstoff und Herstellungsverfahren dafür
Nano-composite de nanotube de carbone à plusieurs parois/à oxydes de métal de transition et son procédé de fabrication

(30) Priority: 04.09.2008 KR 20080087359
(43) Date of publication of application: 17.03.2010
(73) Proprietor: Korea Institute of Science and Technology, Seoul (KR)
(72) Inventor: Kim, Dong-Wan, Seoul (KR); Lee, Du-hee, Seoul (KR); Kang, Jin Gu, Seoul (KR); Choi, Kyoung Jin, Seoul (KR); Park, Jae-Gwan, 139-734 Seoul (KR)
(74) Representative: Charrier, Rapp & Liebau

(56) References cited:
- YANZHEN ZHENG, MILIN ZHANG, AND PENG GAO: "Preparation and electrochemical properties of multiwalled carbon nanotubes?nickel oxide porous composite for supercapacitors" MATERIALS RESEARCH BULLETIN, vol. 42, no. 9, 4 September 2007 (2007-09-04), pages 1740-1747, XP002566207 http://dx.doi.org/10.1016/j.materresbull.2 006.11.022
- GUI-XIN WANG ET AL: "Manganese oxide/MWNTs composite electrodes for supercapacitors" SOLID STATE IONICS, vol. 176, no. 11-12, 31 March 2005 (2005-03-31), pages 1169-1174, XP002566208 doi:10.1016/j.ssi.2005.02.005
- JI YEONG LEE, KUI LIANG, KAY HYEOK AN AND YOUNG HEE LEE: "Nickel oxide/carbon nanotubes nanocomposite for electrochemical capacitance" HTTP://WWW.SCIENCEDIRECT.COM/SCIENCE/JOURN AL/03796779, vol. 150, no. 2, 30 April 2005 (2005-04-30), pages 153-157, XP002566209 http://dx.doi.org/10.1016/j.synthmet.2005. 01.016
- A. LEELA MOHANA REDDY AND S. RAMAPRABHU: "Nanocrystalline Metal Oxides Dispersed Multiwalled Carbon Nanotubes as Supercapacitor Electrodes" J. PHYS. CHEM. C,, vol. 111, no. 21, 2 May 2007 (2007-05-02), pages 7727-7734, XP002566210 DOI: 10.1021/jp069006m

## Description

This application claims under 35 U.S.C. §119(a) the benefit of Korean Patent Application No. 10-2008-0087359 filed September 4, 2008, the entire contents of which are incorporated herein by reference.

### BACKGROUND

### (a) Technical Field

The present invention relates to a transition metal oxide/multi-walled carbon nanotube nanocomposite and its preparation method.

### (b) Background Art

In line with a recent trend for portable electronic products (e.g., laptop computers, mobile phones and musical devices) to be lighter and smaller, and the development of electrical or hybrid automobile, a battery used as a power source needs to be improved so as to have high capacity and power. A battery can be divided into a primary battery usable only once, a secondary battery usable many times after recharge, a fuel cell using hydrogen as fuel and a solar cell using sunlight as an energy source.

While a primary battery (e.g., an alkaline battery, a mercury battery and a manganese battery) may not be recycled and is not eco-friendly despite its relatively high capacity, a rechargeable secondary battery (e.g., a lead post battery, a nickel cadmium battery, a nickel metal hybrid battery, a lithium metal battery and a lithium ion battery) is eco-friendly and energy-efficient due to the relatively high voltage.

Moreover, a secondary battery also shows high capacity and energy density and is commercially used for a wide application, although a fuel cell (e.g., a phosphoric acid fuel cell, a proton exchange membrane fuel cell, a molten carbonate fuel cell and a solid oxide fuel cell) is limited in use due to its low energy density.

In particular, a lithium ion secondary battery uses lithium ions in electrolyte as a charge transmitting substance, and employs reversible intercalation/deintercalation reaction that happens when the ions move to a cathode active material or an anode active material. Although a lithium metal was first used as an anode active material, it is not been studied actively because it shows a drastic decrease in charge-discharge capacity due to the change in electrode surface happening during the charge-discharge and it may cause explosion accompanied by the contact between a cathode and a lithium metal dendrite precipitated from an anode.

In 1991, Sony developed a carbon and a lithium oxide as an anode active material and cathode active material, respectively, and this type of battery began to be called a lithium ion secondary battery. Core technique in a lithium secondary battery is still regarding an anode active material based on an intercalation/deintercalation process of lithium ion/carbon-based material.

Carbon-based materials, most widely used as an anode active material, can be largely divided into a hard carbon (a non-graphitizing carbon), a soft carbon (a graphitizing carbon) and a graphite. Both the hard carbon and the soft carbon are carbons based on non-graphite material. The carbon may not be graphitized by the thermal treatment because crystals of several layers of small graphite phase are non-homogeneously arrayed. In contrast, a soft carbon can be graphitized by the thermal treatment because it has a certain degree of orientation.

These carbons based on non-graphite material have much larger capacity than that of a graphite-based carbon because lithium ions can be stored by an interlayer intercalation and carbon intramolecular pores. However, the carbons based on non-graphite material shows a relatively high specific reversible capacity [R. Alcantara et al., J. Electrochem. Soc. 149 (2002) A201; J. R. Dahn et al., Carbon 37 (1997) 825].

Therefore, graphite has been most widely commercialized among the carbon-based materials, and this can be divided again into natural graphite and artificial graphite. As representative artificial graphite, there are mesocarbon fiber and mesocarbon microbeads, and heteroatom-doped artificial graphite has been recently started to be used as an anode active material. Despite their advantages in the process, mesophase fiber and mesophase carbon microbeads show significantly low capacity due to their high price and complicated process.

Moreover, although natural graphite is higher than mesophase fiber or mesophase carbon microbeads in charge-discharge capacity, its irreversible capacity is significantly low and it is difficult to prepare a high-density electrode plate due to its plate-like shape.

Therefore, there have been attempts made to use doped graphite prepared by doping low-priced coke-based artificial graphite with elements (e.g., boron) as an anode active material [Japanese patent publication No. 3-165463; 3-245458; 5-26680; and 9-63584].

However, the carbon-based anode active material basically has a low theoretical capacity (372 mAh/g) and the capacity of a commercialized product is known as even lower than that of the theoretical capacity. Further, the irreversibility of a lithium secondary battery can increase due to the side reaction happening between an anode active material and electrolyte solution. Thus, there is a limit to satisfying the requirements of high capacity and high power, which are demanded in portable electronic devices and electrical automobiles.

Accordingly, attention has been drawn to metals such as Si, Ge and Sn that can form alloys with lithium as an anode active material which can replace a carbon-based material. These alloy-based materials are much higher than graphite-based material in theoretical capacity (Li-Si : 4200 mAh/ g, Li-Ge : 1600 mAh/ g, Li-Sn : 990 mAh/ g), thereby enabling to achieve high capacity. However, high power may not be accomplished because effective electron conduction passage connected to a conductive additive or a current collector may be discontinued due to excessive volume expansion happening during the lithium intercalation/ deintercalation [A. Anani et al., J. Electrochem. Soc. 134 (1987) 3098; W. J. Weydanz et al., J. Power Sources 81 (1999) 237].

Moreover, it is actively researched regarding transition metal oxides (e.g., CuO, CoO, Fe₂O₃ NiO and MnO₂ that can achieve capacity through the conversion reaction between metal and metal oxide instead of the intercalation/deintercalation as an anode active material that can replace carbon-based materials [P. Poizot et al., Nature 407 (2000) 496; M. Dolle et al., Electrochem. Solid-State Lett. 5 (2002) A18]. These metal oxides induce a charge-discharge process by a conversion reaction such as MₓO_{y} + 2yLi ↔ xM + yLi₂O (M=transition metal). Li₂O, which has been considered as electrochemically inactive, reacts reversibly and achieves much higher charge-discharge capacity than in an intercalation/deintercalation process. However, its rate capability is low and capacity drastically decrease as the number of cycle increases because aggregation of particles happens during the charge-discharge process and electrical contact with a conductive additive or a current collector is discontinued [R. Yang et al., Electrochem. Solid-State Lett. 7 (2004) A496-A499].

Moreover, a transition metal oxide such as TiO₂ is also drawing attention because it completes a reversible reaction by an intercalation/deintercalation process as anode active material that replaces a carbon-based material. Although this is not so high in capacity, it produces less side products from the side reaction with electrolyte and can accomplish high power.

To overcome the problems of the alloy-based materials and the transition metal oxide anode active materials having low power and unstable cycle properties despite their high capacity, it has been attempted to use a one-dimensional nano framework such as a nanowire as an anode active material in these nano frameworks with a relatively lower dimension such as particularly in materials such as Si, Ge and Co₃O₄ [C. K. Chan et al., Nature Nanotech. 3 (2008) 31; C. K. Chan et al., Nano Lett. 8(1) (2008) 307; K. M. Shaju et al., Phys. Chem. Chem. Phys. 9 (2007) 1837]. According to the report, a one-dimensional nano framework can relax stress due to the change in volume happening during the charge-discharge process and effectively transmit electrons, thereby enabling to overcome the problems of the alloy-based material and transition metal oxide, i.e., low power properties and cycle stability. However, its preparation method is complicated and it is difficult to produce the material on a large scale.

Therefore, it is essential for an anode active material to have both high capacity and high power by effectively transmitting electrons during the charge-discharge process in order to place the conventional carbon-based materials.

A carbon nanotube is a one-dimensional framework as an anode active material for a lithium secondary battery is advantageous in high conductivity and wide specific surface area, while it has a high level of voids and low volumetric capacity and is as low as graphite in theoretical capacity (372 mAh/g). Therefore, there is an attempt reported to combine material enabling high capacity (e.g., SnO₂, Sn and SnSb) with a carbon nanotube. It was reported that a high level of charge-discharge capacity can be maintained regardless of the number of cycle. This excellent cycle property is because a carbon nanotube reduce stress caused by change in volume and aggregation of active materials during a charge-discharge cycle, and also improves the conductivity of lithium ion as well as electrons [Y. Wang et al., Adv. Mat. 18 (2006) 645; G. An et al., Nanotech. 18 (2007) 435707; R. Li et al., J. Phys. Chem. C 111 (2007) 9130; M. S. Park et al., Chem. Mater. 19 (2007) 2406].

### SUMMARY OF THE DISCLOSURE

Therefore, the present inventors have exerted extensive researches, and have finally found that both high capacity and high power can be achieved by a metal oxide and a multi-walled carbon nanotube, respectively when a nano framework with a dimension of between zero and one, which is prepared by uniformly binding nanopowder-type transition metal oxide (CuO, CoO, Fe₂O₃, NiO, MnO₂, TiO₂) to multi-walled carbon nanotube, is used as an anode active material. The present invention has been completed by using a surfactant or the uniform dispersion and adopting urea synthesis.

Accordingly, the present invention aims to a process of preparing a nanocomposite with a dimension of between zero and one by combining a dispersion method using a surfactant and urea synthesis, which is simple and enables to the manufacture of metal oxide nanopowders at a low temperature on a large scale.

The present invention also aims to provide a nanocomposite thus prepared and its uses thererof.

### BRIEF DESCRIPTION OF THE DRAWINGS

The above and other features of the present invention will now be described in detail with reference to certain exemplary embodiments thereof illustrated the accompanying drawings which are given hereinbelow by way of illustration only, and thus are not limitative of the present invention, and wherein:
Figure 1 is a field emission scanning electron microscopic image of a transition metal oxide or hydroxide prepared by urea synthesis [(a) cobalt hydroxide, (b) copper hydroxide, (c) iron hydroxide, (d) nickel hydroxide, (e) manganese hydroxide, (f) iron metal oxide (Fe₂O₃) and (g) nickel metal oxide (NiO)];
Figure 2 is an X-ray powder diffraction pattern of a transition metal oxide or hydroxide prepared by urea synthesis;
Figure 3 is an image showing the precipitation of multi-walled carbon nanotube with time when a dispersing agent is either used or not;
Figure 4 schematically shows a process of preparing a nanocomposite of a transition metal oxide or hydroxide and a multi-walled carbon nanotube as disclosed in the present invention;
Figure 5 is a field emission scanning electron microscopic image showing the shape of a transition metal oxide/multi-walled carbon nanotube nanocomposite;
Figure 6 is a transmission electron microscopic image showing the shape of a transition metal oxide/multi-walled carbon nanotube nanocomposite [scale bar: (a) 10 nm (b) 10 nm (c) 2 nm and (d) 10 nm];
Figure 7 is a curve showing the voltage change depending on the initial capacity, which is obtained by measuring electrochemical properties of a pure transition metal oxide prepared by urea synthesis herein;
Figure 8 is a curve showing the voltage change depending on the initial capacity, which is obtained by measuring electrochemical properties of transition metal oxide/ multi-walled carbon nanotube nanocomposite herein;
Figure 9 is a curve showing the change in capacity of TiO₂/MWCNT, one of transition metal oxide/multi-walled carbon nanotube nanocomposites herein up to 100 cycles; and
Figure 10 shows the capacity change with current density in a cell by using a pure transition metal oxide prepared by urea synthesis herein and a transition metal oxide/ multi-walled carbon nanotube nanocomposite electrode.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to the preferred embodiments of the present invention, examples of which are illustrated in the drawings attached hereinafter, wherein like reference numerals refer to like elements throughout. The embodiments are described below so as to explain the present invention by referring to the figures.

Hereunder is provided a detailed description of the present invention.

The present invention discloses a process of preparing a transition metal oxide/multi-walled carbon nanotube nanocomposite, the process comprising (a) dissolving a surfactant in deionized water; (b) adding a multi-walled carbon nanotube in the solution (a) and dispersing the carbon nanotube and the surfactant; (c) adding a metal chloride and urea to the solution (b); (d) stirring the solution (c) and elevating the temperature of the solution (c) to 95-105 °C while stirring; (e) refluxing the solution (d) to obtain a precipitate and (f) thermally treating the precipitate under air or a vacuum-dried atmosphere.

The present invention relates to a nanocomposite prepared into a composite form of (i) a one-dimensional multi-walled carbon nanotube (MWCNT) prepared by urea synthesis so as to cause a transition metal oxide to be uniformly dispersed onto a carbon nanotube by a surfactant, thereby giving an effective electron transmission and stress relaxation and (ii) a high-power-enabling a zero-dimensional nanopowder-type transition metal oxide, and its preparation method.

As used herein, the term of "a transition metal" has the same meaning as commonly understood by one of ordinary skill in the art to which the invention pertains without limitation. Period 4 metals in a periodic table are preferred, and examples of such a metal include Cu, Co, Fe, Ni, Mn and Ti.

A synthesis for preparing an oxide nanopowder herein is urea synthesis among liquid-phase synthesis methods. In this synthesis, urea material, [(NH₂)₂CO], is reacted with a metal chloride precursor (e.g., CuCl₂, CoCl₂, FeCl₃, NiCl₂, MnCl₂ and TiCl₃) to provide a desired oxide. A synthesis for a metal oxide powder synthesis can be largely divided into a gas-phase, a solid-phase synthesis and a liquid-phase synthesis. A gas-phase synthesis is advantageous in obtaining a highly crystalline product while the process is complicated and causes high cost. A solid-phase synthesis is economical while uniform powder is difficult to obtain by using the synthesis and the resulting particles have a relatively large particle size.

Although a liquid-phase synthesis is not very efficient in obtaining a highly crystalline product, crystalline products can be produced at a relatively low temperature and the produced particles have a uniform and relatively small particle size depending on the synthesis methods.

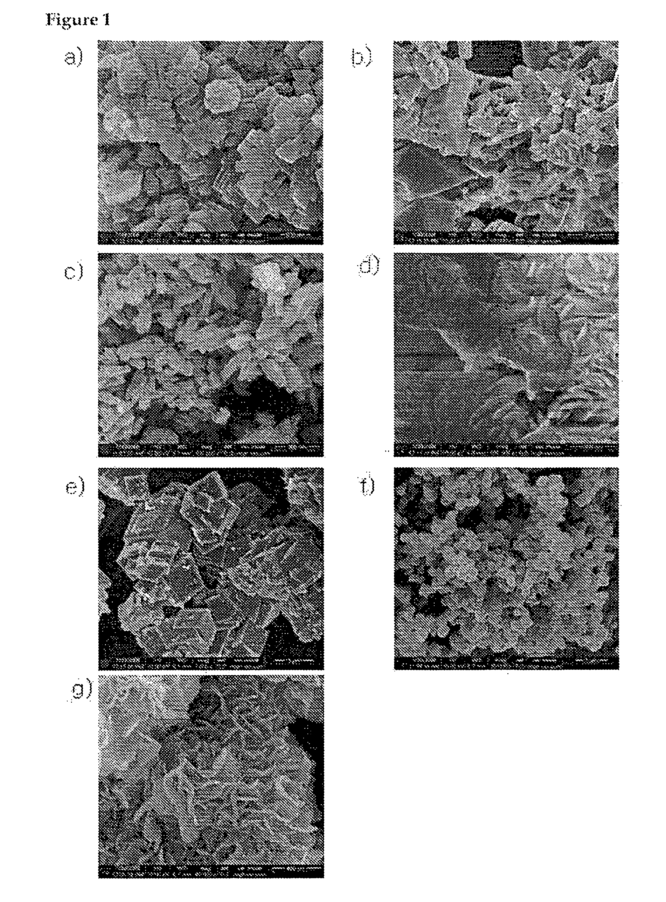

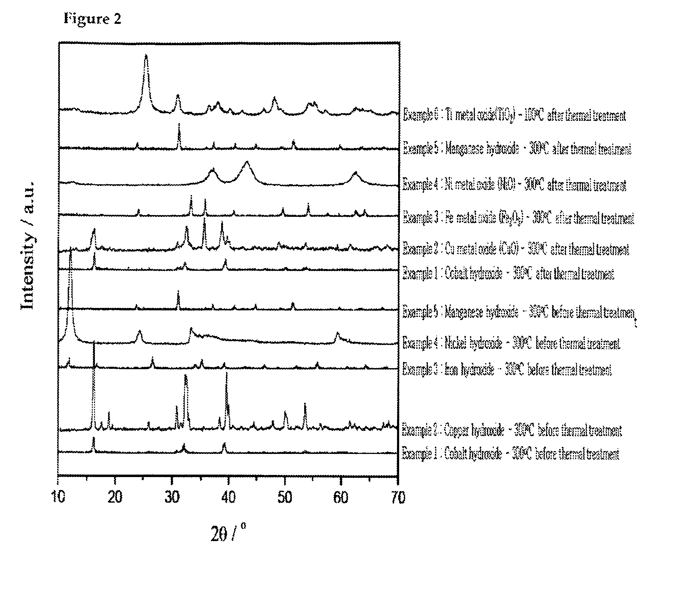

In particular, urea synthesis is superior to other liquid-phase synthesis methods such as a hydrothermal method and a sol-gel method because it is simple and can produce crystalline nanopowders with a uniform size at a low temperature (100-300 °C) on a large scale. Transition metal oxide nanopowders prepared by urea synthesis and transition metal hydroxides produced during the synthesis (intermediates) can be observed with a field emission scanning electron microscope (FESEM) [Figure 1]. Figure 1 shows the intermediates and the nano oxide have various shapes depending on the type of a transition metal. Moreover, whether a metal oxide and a transition metal hydroxide are synthesized or not along with their crystalline structure can be ascertained with an X-ray diffraction pattern (XRD) [Figure 2]. Figure 2 shows that, when thermally treated at 300 °C, CuO, Fe₂O₃, NiO and TiO₂ transition metal oxides are synthesized in a crystalline form while Co and Mn remain as a metal hydroxide, an intermediate.

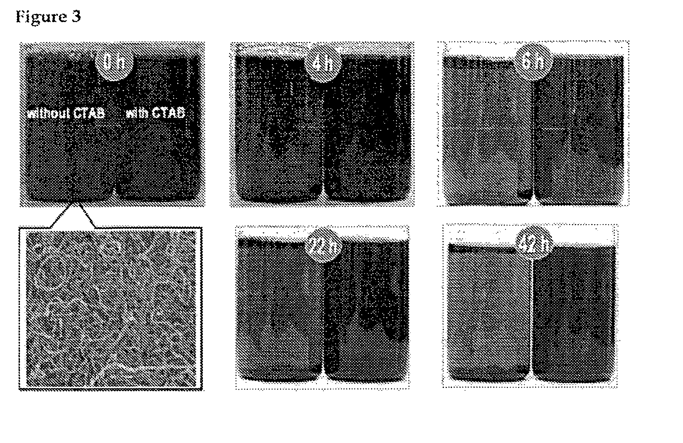

A surfactant dispersion method used herein for dispersing a nanopowder prepared by urea synthesis is to cause oxide nanopowders to uniformly surround the surface of a carbon nanotube which is cation-functionalized with a surfactant. In particular, a surfactant allows multi-walled carbon nanotubes to be uniformly dispersed and not to be precipitated in a solution, which can be ascertained by Figure 3 [Figure 3]. Figure 3 shows that multi-walled carbon nanotubes are not precipitated with time but remain dispersed in a solution where a surfactant is dissolved. Examples of a surfactant used for dispersing multi-walled carbon nanotubes include a cationic surfactant such as cetyltrimethylammonium bromide (CTAB) and cetylpyridinium chloride. A cation surfactant causes multi-walled carbon nanotubes to carry positive charges on its surface in a solution, and facilitates the bonding of between a metal ion and an anionic hydroxide ion (OH-) generating from the dissolved urea, thereby enabling to produce a composite comprising a carbon nanotube and nano metal oxides uniformly dispersed onto the surface of it.

Preferably, a surfactant is used in an amount of 0.05-50 parts by weight relative to 100 parts by weight of carbon nanotube.

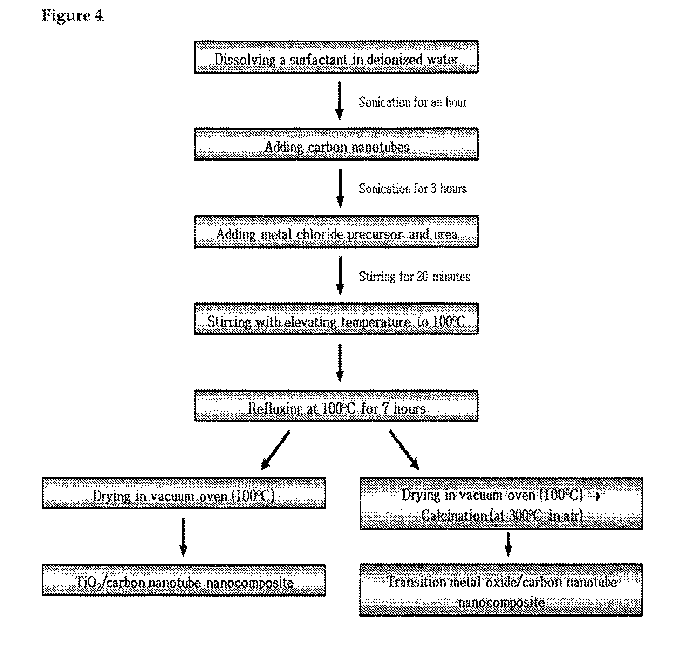

A combination of urea synthesis and surfactant dispersion, which is used for preparing an anode active material of a nanocomposite with a dimension of between zero and one in the present invention, is provided in Figure 4. Hereunder is provided a detailed description with reference to Figure 4.

A surfactant is dissolved in deionized water by sonication, and a multi-walled carbon nanotube is added to the solution and sonicated for at least 3 hours. When the sonication is performed for less than 3 hours, the surfactant may not be uniformly dispersed around the carbon nanotube. As the cation-carrying substance does not sufficiently surround carbon nanotubes, metal oxide particles prepared by urea synthesis can aggregates instead of sufficiently surrounding carbon nanotubes.

While maintaining the room temperature condition, a metal chloride precursor and urea are added to the dispersion solution of a multi-walled carbon nanotube and a surfactant to adjust their concentration to 0.015-0.1 M and 0.3-0.5 M, respectively. When the concentration of the metal chloride precursor is more than aforementioned range, unreacted metal chloride precursor can induce a side reaction to produce a secondary phase. When the concentration is less than the aforementioned range, the production of nanopowders can decrease because it may not react with urea sufficiently. Moreover, when the concentration of the urea is more than the aforementioned range, the production of nanopowders can decrease like the case where the concentration of a metal chloride precursor is too low. When the concentration of the urea is less than aforementioned range, unreacted metal chloride precursor can induce a side reaction to produce a secondary phase.

While observing a pH value, a temperature is slowly elevated to 95-105 °C. It is preferred to maintain the pH of the solution to 1 or lower until a temperature of 70-100 °C because a relatively low pH value ensures an optimized condition for forming oxides.

When the solution is refluxed at 95-105 °C for 5-10 hours with stirring, metal hydroxides (M(OH)ₓ or MOOH), intermediates, are precipitated. When the temperature is lower than 95°C, the decomposed urea may not react with a metal chloride precursor and nanopowders may not be precipitated. When the temperature is higher than 105 °C, the size of the precipitated nanopowders may increase. Thus precipitated mixture has a structure where metal hydroxides, an intermediate before the formation of metal oxides, are uniformly attached to multi-walled carbon nanotubes. Chemical formula and color of the metal hydroxide vary depending on the metal precursor used. Various colors, for example pink, brown, earth yellow and white, can be observed, and their colors are described in Examples.

The mixture is thermally treated to form a desired metal oxide under either a vacuum-dried atmosphere or an air atmosphere depending on the kind of oxide, and any method usually adopted can be used in the present invention without limitation.

In the present invention, the vacuum-drying is conducted at 95-105 °C and 10-²-10-³ torr. Outside the ranges of temperature and pressure, the dehydration may not be sufficient or impurities may be incorporated. Moreover, the combustion is conducted under air atmosphere by elevating temperature at a rate of 1-10 °C/min to 290-310 °C and maintaining the temperature for 0.5-2 hours. Outside the ranges of gas atmosphere, temperature and time, undesired secondary phase may be formed or particle size may increase.

Nanocomposite powders finally obtained after the thermal treatment has a structure where metal oxide nanopowders with a size of 5-20 nm uniformly surround the surface of multi-walled carbon nanotubes with a diameter of 20-30 nm and a length of several micrometers. Oxide nanopowders have a very uniform particle size and a narrow particle size distribution.

The prepared nanocomposite has a structure where metal oxide nanopowders are present uniformly around multi-walled carbon nanotubes. The structure can be observed with a field emission scanning electron microscope (FESEM) and a high-resolution transmission electron microscope (HRTEM). Moreover, the phase and the crystalline structure of the product can be ascertained by using an X-ray diffraction patterns (XRD).

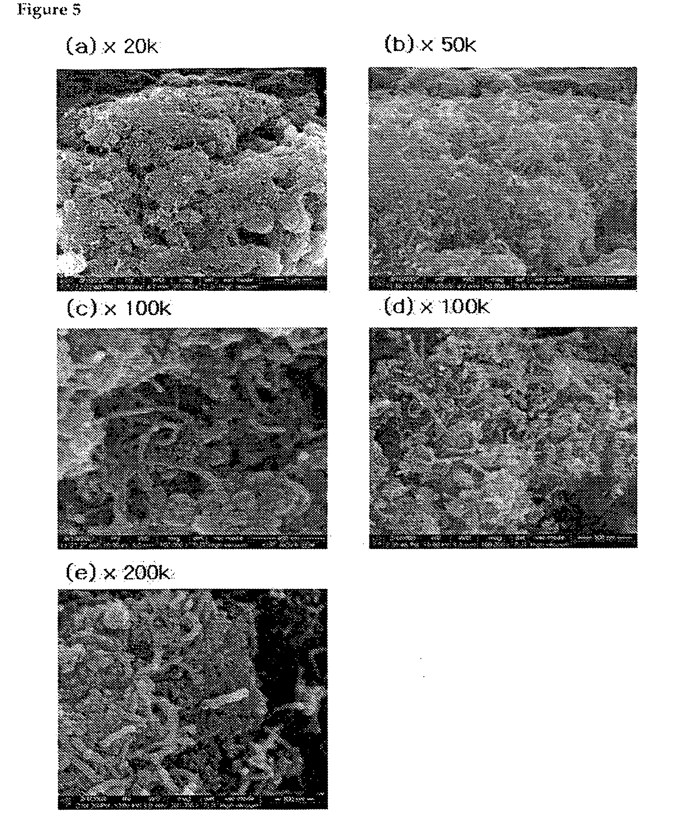

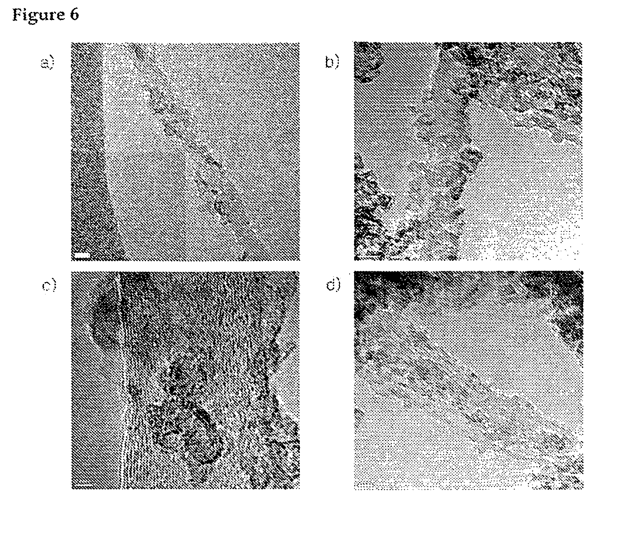

The structure of the nanocomposite ascertained with various low-powered FESEM images (Figure 5) and various high-powered HRTEM images (Figure 6).

Figure 5 shows that transition metal oxides are present uniformly around multi-walled carbon nanotubes. Moreover, Figure 6 shows that metal oxide powders attached to carbon nanotubes are crystalline, which is in accordance with XRD results of Figure 2.

In the meantime, such a metal oxide-multi-walled carbon nanotube nanocomposite can be used for an electrochemical devices, specifically a lithium ion secondary battery and electrical double-layered super capacitor.

In the present invention, therefore, to ascertain the usefulness of a nanocomposite herein as an anode active material in a lithium secondary battery, an electrode for a lithium battery and a half-cell comprising the electrode were prepared, followed by the evaluation of the electrochemical properties of such a cell. A lithium ion secondary battery shows excellent electrochemical performance when the number of lithium ions per molecular weight of the used anode active material increases and aggregation of particles is reduced during a charge-discharge.

The obtained nanocomposite with a dimension of between zero and one, a conductive additive and a binder are dissolved in an inert organic solvent, and homogeneously mixed by sonication treatment and a mechanical agitator. The mixture in a slurry state is coated onto a current collector to give an electrode.

A half-battery is prepared by using thus prepared nanocomposite electrode and a lithium metal ion as a cathode and an anode, respectively, and by placing electrolyte and a separator between the two electrodes. The cell is charged and discharged at a voltage ranging 0.01-3.0 V by changing current density, and ten charge-discharge cycles are operated at each current density.

Among the prepared nanocomposite frameworks, nanocomposites of a carbon nanotube and metal oxides (CuO, Fe₂O₃, NiO and TiO₂ except Co and Mn, oxides of which may not be obtained at 300 °C) are subject to the evaluation of electrochemical properties. Electrodes and prepared and their properties were measured in the order above, and it has been ascertained that nanocomposites of a carbon nanotube and particular metal oxides (CuO, Fe₂O₃, NiO) show high power properties by exhibiting high capacity even at a high current density, while TiO₂ nanocomposite shows high power properties and stability after 100 cycles despite its relatively lower capacity.

### EXAMPLES

The following examples illustrate the invention and are not intended to limit the same.

### Example 1

A surfactant, CTAB 3 mg, was weighed and dissolved in deionized water 1.5 L by sonication for an hour. A multi-walled carbon nanotube 0.3 g was added to the solution and sonicated for 3 hours in such a manner that the surfactant may be uniformly dispersed around the carbon nanotube. A weighed amount of CuCl₂ was added to the solution to adjust the concentration of CuCl₂ to 0.1 M. A weighed amount of urea was also added to the solution to adjust the concentration to 0.3 M. The solution was stirring for 20 minutes and temperature was elevated to 100 °C while observing pH and maintaining the stirring. The solution was refluxed at 100 °C for 7 hours to allow a reaction intermediate, copper hydroxide, to be uniformly attached to the multi-walled carbon nanotube. Thus formed emerald-colored precipitate was thermally treated under air atmosphere at a rate of 5 °C/min to 300 °C, and temperature was maintained for an hour, thus providing a gray-black final a nanocomposite of CuO nanopowder/multi-walled carbon nanotube.

### Examples 2-5

A nanocomposite was prepared by proceeding as described in Example 1 except using a metal chloride precursor shown in Table 1. Colors of an intermediate and a final nanocomposite are also provided in Table 1.

### Example 6

TiO₂ nanopowder was used as a metal oxide nanopowder, and the concentrations of metal precursor (TiCl₃) and urea are 0.015 M and 0.5 M, respectively. Instead of an air atmosphere treatment, a vacuum-drying was conducted at 100 °C and 10⁻² torr for 5 days. Metal chloride precursor was used as shown in Table 1. Other conditions were the same with those in Example 1.

**Table 1**

| Ex. | Zero-dimensional / one-dimensional nanocomposite | Surfactant | Type of metal precursor | | | | | | Color | |
|---|---|---|---|---|---|---|---|---|---|---|
| | | | Cu | Co | Fe | Ni | Mn | Ti | Intermediate | Final |
| 1 | CuO/MWCNT | CTAB | CuCl₂ | - | - | - | - | - | Emerald | Gray-black |
| 2 | CoO/MWCNT | CTAB | - | CoCl₂ | - | - | - | - | Pink | Pink |
| 3 | Fe₂O₃/MWCNT | CTAB | - | - | FeCl₃ | - | - | - | Earth yellow | Reddish-brown |
| 4 | NiO/MWCNT | CTAB | - | - | - | NiCl₂ | - | - | Emerald | Black |
| 5 | MnO_{2/}MWCNT | CTAB | - | - | - | - | MnCl₂ | - | Brown | Brown |
| 6 | TiO_{2/}MWCNT | CTAB | - | - | - | - | - | TiCl₃ | White | White |

### Comparative Examples 1-6

For analyzing the properties of a second battery of nanocomposites with a dimension of between zero and one prepared in Examples 1-6, a pure transition metal oxide nanopowder was prepared as a control. Procedure is different from that of Examples 1-6 in that deionized water (1.5 L) used here comprises neither multi-walled carbon nanotube nor surfactant. Other conditions were the same with those in Examples 1-6. Urea synthesis was used.

### Test Example 1

Two types of materials, i.e., nanocomposites with a dimension of between zero and one prepared in Examples 1-6 and nanopowders prepared in Comparative Examples 1-6, were used as an anode active material for a secondary battery. To evaluate the two types of material, capacity of a half-battery comprising an electrode prepared by using the material was measured.

### (a) Preparation of electrodes

As an anode active material, nanocomposites (2 mg) of Examples 1-6 2 were weighed so that the weight ratio of nanocomposite to a binder, Kynar 2801 (PVdF-HFP) may be 85 :15, and dissolved in an inert organic solvent, N-methyl-pyrrolidone (NMP) to give a slurry. The slurry was coated on a current collector, a copper foil, and dried in a vacuum oven at 100 °C for 4 hours. The dried slurry was pressed and punched into a circular shape.

As a control, metal oxide nanopowders of Comparative Examples 1-6 were weighed so that the weight ratio of the metal oxide nanopowder : a conductive additive (graphite, MMM Cabon) : a binder (Kynar 2801) may be 68 : 12 : 20, and dissolved in an inert organic solvent to give a slurry. A nanocomposite electrode was prepared as described above.

### (b) Preparation of half-battery and measurement of electrochemical properties

Thus prepared nanocomposite electrode or nanopowder electrode and a lithium metal ion were used as a cathode and an anode, respectively. Swagelok-type half-battery was prepared by placing electrolyte and a separator (Celgard 2400) between the two electrodes. A solution prepared by dissolving LiPF₆ in a mixture of ethylene carbonate (EC) and methyl carbonate (DMC) (1:1 v/v), and used as electrolyte. The procedure was followed in a glove box filled with an inert gas, argon.

The Swagelok-type half-battery was operated in a Galvanostatic mode using a charge-discharge cycler (WBCS 3000, WonA Tech., Korea) by changing current density at a voltage ranging 0.01-3.0 V. Electrochemical properties were evaluated by analyzing the change in voltage with time or capacity. The current density was calculated by using the theoretical capacity of each nanocomposite, and the calculated current densities are 1C, 3C, 5C and 10C. Ten cycles were operated for each current density.

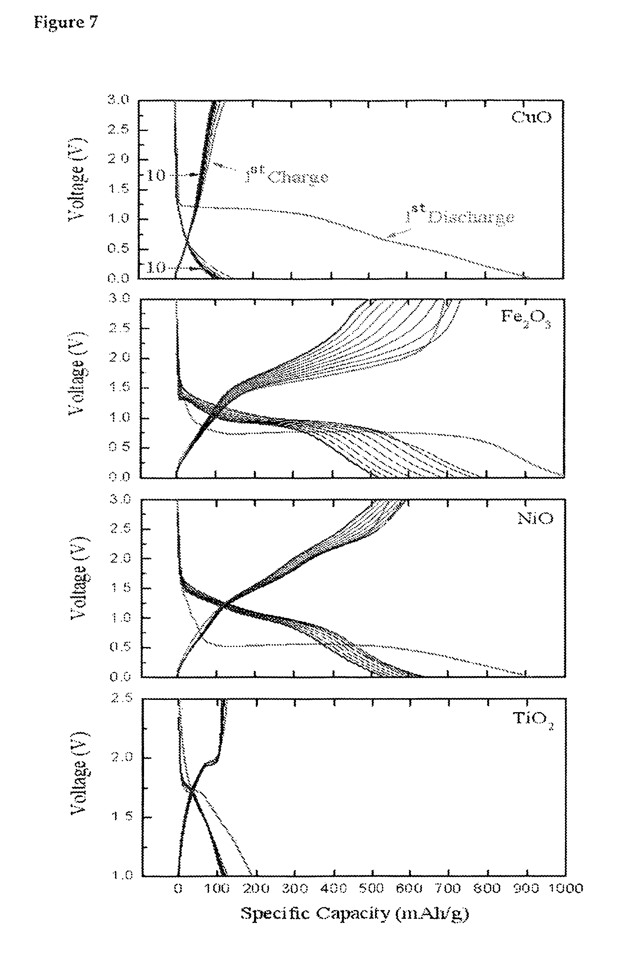

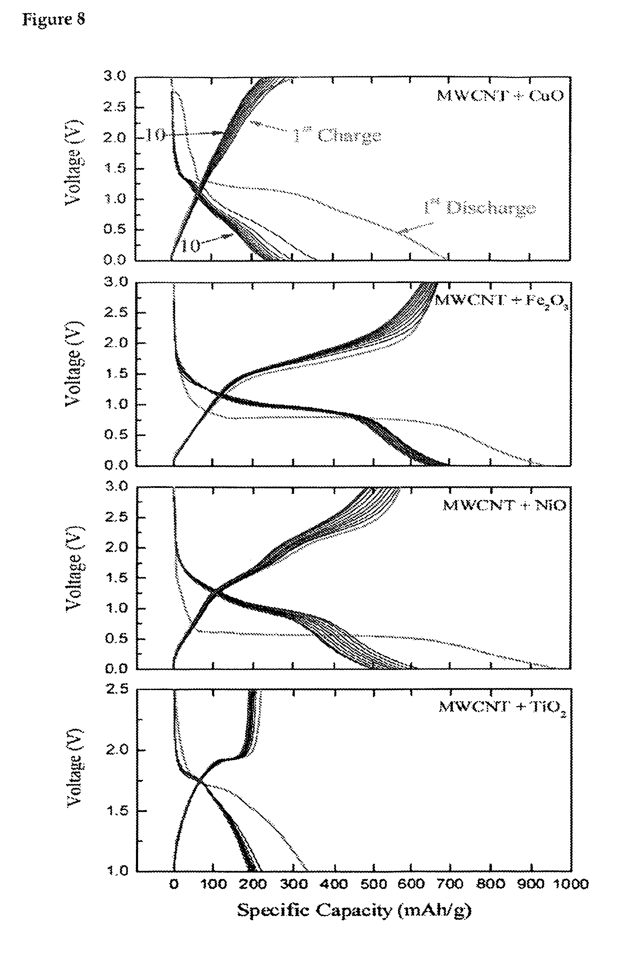

Change in voltage with capacity when current density is 1C is presented in Figures 7-8. Figures 7-8 are the results obtained by using, as anode active material, a pure transition metal oxide and a nanocomposite, respectively. Compared to the pure transition metal oxide, the nanocomposite shows higher capacity and better cycle properties.

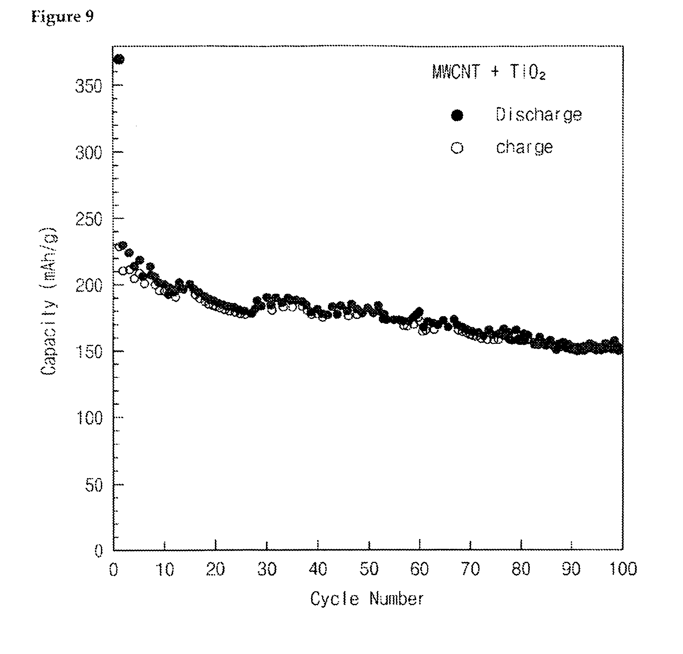

Moreover, to test the cycle stability of a nanocomposite prepared in the present invention, the TiO₂/multi-walled carbon nanotube nanocomposite was subject to a charge-discharge test for 100 cycles, and the results are provided in Figure 9. Figure 9 shows that the capacity after 100 cycles decreases merely 10% relative to the initial capacity. This is due to stress relaxation and electron transmission effects caused by multi-layered carbon nanotubes.

Table 2 shows the discharge capacity values at 10^{th} cycle for each current density as a result of the evaluation secondary battery properties nanocomposites (Examples) and pure metal oxide nanopowders (control, Comparative Examples).

**Table 2**

| Ex. | Active material | Discharge capacity (mAh/g), 1C | Discharge capacity (mAh/g), 3C | Discharge capacity (mAh/g), 5C | Discharge capacity (mAh/g),10C |
|---|---|---|---|---|---|
| Ex.1 | CuO/MWCNT | 235 | 140 | 94 | 49 |
| Ex.3 | Fe₂O_{3/}MWCNT | 643 | 448 | 303 | - |
| Ex. 4 | NiO/MWCNT | 501 | 254 | 117 | - |
| Ex. 6 | TiO_{2/}MWCNT | 190 | 168 | 154 | 132 |
| Comp.Ex.1 | CuO | 101 | 56 | 42 | 29 |
| Comp.Ex.3 | Fe₂O₃ | 499 | 215 | 89 | - |
| Comp.Ex.4 | NiO | 509 | 197 | 65 | - |
| Comp.Ex.6 | TiO₂ | 114 | 94 | 79 | 60 |

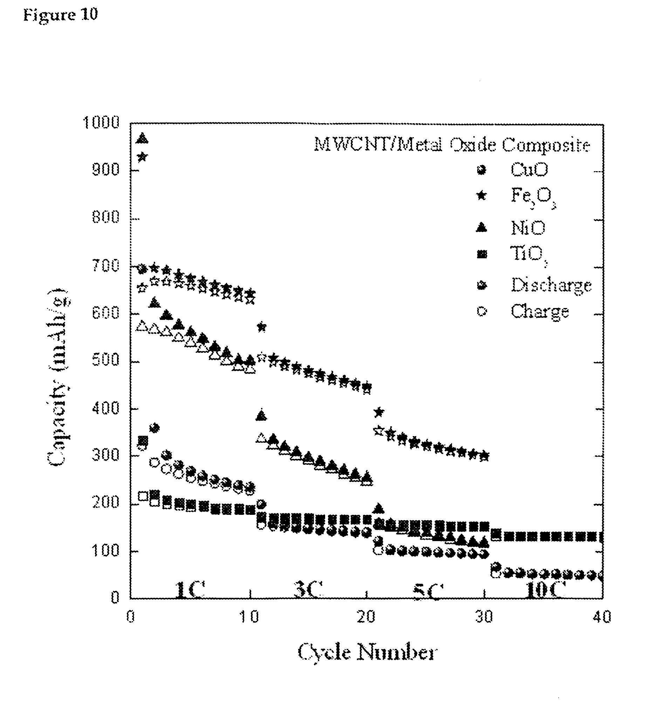

Table 2 shows that nanocomposites with a dimension of between zero and one (Examples) are far superior to pure metal oxide nanopowders (Comparative Examples) in rate capability as an anode active material. This can also be ascertained in Figure 10, which shows the results of ten-cycle charge-discharge for each current density.

According to Table 2 and Figure 10, nanocomposites show a high capacity and high power even at a relatively high current density (3C, 5C and 10C) compared to pure metal oxide nanopowders. This ascertains that a high capacity can be achieved by a zero-dimensional nanopowder and a high power can also be accomplished at the same time by the one-dimensional electron passage effect due to a one-dimensional multi-walled carbon nanotube, when nanocomposite is prepared by using a metal oxide nanopowder and a multi-walled carbon nanotube.

A nanocomposite with a dimension of between zero and one can be produced on a large scale by a simple process according to urea synthesis and a surfactant-mediating dispersion method disclosed in the present invention. Moreover, this can achieve high rate capabilities due to both the high capacity of a transition metal oxide combined with the excellent electron transport effect endowed by one-dimensional multi-walled carbon nanotube. Further, a nanocomposite of the present invention has a relatively high specific surface because transition metal oxide nanopowders are uniformly dispersed onto a carbon nanotube by a surfactant.

Therefore, a nanocomposite disclosed in the present invention is economical and obtainable on a large scale, and therefore can be applied to various uses such as a lithium secondary battery, electrical double-layered super capacitor and a pseudo-super capacitor.

### Industrial Applicability

The problems of a conventional anode active material for a lithium secondary battery, i.e., a relatively low capacity and power can be overcome by a nanocomposite with a dimension of between zero and one of the present invention. A nanocomposite herein comprises a nano metal oxide and a multi-walled carbon nanotube, which enable a high capacity and a high power, respectively. In particular, Urea synthesis and a surfactant dispersion method disclosed in the present invention as a method of preparing the composite are simple in procedure and economical, and can easily used for a large-scale manufacture even at a low temperature. Accordingly, these methods can be applied for preparing an electric double-layered super capacitor as well as a lithium secondary battery.

The invention has been described in detail with reference to preferred embodiments thereof. However, it will be appreciated by those skilled in the art that changes may be made in these embodiments without departing from the principles of the invention, which are defined in the appended claims and their equivalents.

## Claims

1. A process of preparing a transition metal oxide/multi-walled carbon nanotube nanocomposite, the process comprising:
(a) dissolving a cationic surfactant in deionized water;
(b) adding a multi-walled carbon nanotube in the solution (a) and dispersing the carbon nanotube and the surfactant;
(c) adding a metal chloride and urea to the solution (b);
(d) elevating the temperature of the solution (c) to 95-105 °C while stirring;
(e) refluxing the solution (d) to obtain a precipitate; and
(f) thermally treating the precipitate under air or a vacuum-dried atmosphere.

2. The process of claim 1, wherein the surfactant is used in an amount of 0.05-50 parts by weight relative to 100 parts by weight of the carbon nanotube.

3. The process of claim 1, wherein a concentration of the metal chloride is 0.015-0.1 M.

4. The process of claim 1, wherein a concentration of the urea is 0.3-0.5 M.

5. The process of claim 1, wherein the reflux is conducted at 95-105 °C for 5-10 hours.

6. The process of claim 1, wherein the thermal treatment under air atmosphere is conducted by elevating its temperature to 290-310 °C at a rate of 1-10 °C/min and maintaining the temperature for 0.5-2 hours.

7. The process of claim 1, wherein the thermal treatment under a vacuum-dried atmosphere is conducted at 95-105 °C and 10⁻²-10⁻³ torr.

## Patentansprüche

1. Verfahren zur Herstellung von einem Nanocomposit aus Übergangsmetalloxid / mehrwandigem Kohlenstoff-Nanoröhrchen, wobei das Verfahren umfasst:
(a) Auflösen von einem kationischen Tensid in desionisiertem Wasser;
(b) Hinzufügen von mehrwandigem Kohlenstoff-Nanoröhrchen in die Lösung (a) und Dispergieren von Kohlenstoff-Nanoröhrchen und dem Tensid;
(c) Hinzufügen von einem Metallchlorid und Harnstoff zu der Lösung (b);
(d) Erhöhen der Temperatur der Lösung (c) auf 95-105°C unter Rühren;
(e) Rückfluss-Behandlung der Lösung (d), um einen Niederschlag zu erhalten; und
(f) thermisches Behandeln des Niederschlags unter Luft oder in einer Vakuum-getrockneten Atmosphäre.

2. Verfahren nach Anspruch 1, wobei das Tensid in einer Menge von 0,05-50 Gewichtsteilen, bezogen auf 100 Gewichtsteile Kohlenstoff-Nanoröhrchen, verwendet wird.

3. Verfahren nach Anspruch 1, wobei eine Konzentration von dem Metallchlorid 0,015-0,1 M ist.

4. Verfahren nach Anspruch 1, wobei eine Konzentration von dem Harnstoff 0,3-0,5 M ist.

5. Verfahren nach Anspruch 1, wobei der Rückfluss bei 95-105°C für 5 - 10 Stunden durchgeführt wird.

6. Verfahren nach Anspruch 1, wobei die thermische Behandlung unter Luftatmosphäre durch Erhöhen ihrer Temperatur auf 290-310°C mit einer Geschwindigkeit von 1-10°C/min und Halten der Temperatur für 0,5-2 Stunden durchgeführt wird.

7. Verfahren nach Anspruch 1, wobei die thermische Behandlung unter einer Vakuum-getrockneten Atmosphäre bei 95-105°C und 10⁻²-10⁻³ Torr durchgeführt wird.

## Revendications

1. Procédé de préparation d'un nanocomposite composé de nanotubes de carbone à parois multiples et d'un oxyde de métal de transition, le procédé comprenant les étapes consistant à :
(a) dissoudre un tensioactif cationique dans de l'eau déionisée ;
(b) ajouter des nanotubes de carbone à parois multiples dans la solution (a) et disperser les nanotubes de carbone et le tensioactif ;
(c) ajouter un chlorure métallique et de l'urée dans la solution (b) ;
(d) élever la température de la solution (c) à une valeur entre 95 et 105 °C tout en agitant ;
(e) porter la solution (d) à reflux afin d'obtenir un précipité ; et
(f) traiter thermiquement le précipité sous atmosphère d'air ou sous vide.

2. Procédé selon la revendication 1, dans lequel le tensioactif est utilisé en une quantité allant de 0,05 à 50 parties en poids par rapport à 100 parties en poids de nanotubes de carbone.

3. Procédé selon la revendication 1, dans lequel une concentration du chlorure métallique se situe entre 0,015 et 0,1 M.

4. Procédé selon la revendication 1, dans lequel une concentration d'urée se situe entre 0,3 et 0,5 M.

5. Procédé selon la revendication 1, dans lequel le reflux est réalisé à une température entre 95 et 105 °C pendant 5 à 10 heures.

6. Procédé selon la revendication 1, dans lequel le traitement thermique sous atmosphère d'air est réalisé en élevant la température de la réaction à une valeur entre 290 et 310 °C à une vitesse allant de 1 à 10 °C/min et en maintenant la température pendant 0,5 à 2 heures.

7. Procédé selon la revendication 1, dans lequel le traitement thermique sous vide est réalisé à une température entre 95 et 105 °C et sous une pression de 10⁻² à 10⁻³ torr.
